# EUROPEAN PATENT SPECIFICATION

(11) **EP 3 797 920 B1**
(45) Date of publication and mention of the grant of the patent: **11.09.2024**
(21) Application number: 20198447.3
(22) Date of filing: 25.09.2020
(51) Int. Cl.: B23K 26/22, B23K 26/21, B23K 26/60, H05K 3/32, B23K 101/32, B23K 101/38

(54) **WELDING PROCESS**
SCHWEISSVERFAHREN
PROCÉDÉ DE SOUDAGE

(30) Priority: 26.09.2019 DE 102019126012
(43) Date of publication of application: 31.03.2021
(73) Proprietor: TE Connectivity Germany GmbH, 64625 Bensheim (DE)
(72) Inventor: BERIKAI VASU, Aniruddha, 64293 Darmstadt (DE); DRESSEL, Andre Martin, 68623 Lampertheim (DE); BLUMENSCHEIN, Rudi, 73479 Ellwangen (DE); BRABETZ, Florian, 64579 Gernsheim (DE)
(74) Representative: Patentanwaltskanzlei WILHELM & BECK

(56) References cited:
- US-A- 5 676 865
- US-A1- 2005 258 153

## Description

The invention relates to a welding process of a conductor on a workpiece.

It is known from the prior art to weld conductors to a workpiece. It may in this case be provided that the conductor has one or more cores, the one or more cores being enclosed by an insulating material. In order to weld the conductor to a workpiece, the conductor is stripped of its insulation in one region, that is to say the insulating material is removed. The stripped region of the conductor is subsequently pressed onto the workpiece, for example by means of holding-down devices. In the case of a multi-core conductor, it may be the case that for this purpose a number of conducting regions that are insulated from one another are arranged in the workpiece. After the pressing down of the conductor onto the workpiece, at least one core of the conductor is in mechanical contact with either the workpiece or at least one conducting region of the workpiece, and can thus be welded to the workpiece by means of a laser welding process.

On account of the conductor being at a distance from the workpiece as a result of the insulating material, the holding down of the conductor must take place in such a way that the core or the cores of the conductor is/are pressed against the workpiece with a certain expenditure of force. The holding-down devices must be equipped for this and, for this reason, can also only be used in the stripped region of the conductor.

Document US 5 676 865 A, on which the preamble of claim 1 is based, discloses a welding process in which a bead is formed in a stripped region of a conductor to allow for mechanical contact of the conductor with a workpiece.

One problem addressed by the invention is that of providing an improved welding process.

These problems are solved by the process for welding a conductor onto a workpiece of the independent patent claim. Advantageous configurations are specified in the dependent patent claims.

In a process for welding a conductor onto a workpiece, the conductor comprises a first metal and the workpiece comprises a second metal. In order to weld the conductor to the workpiece, the following steps are carried out. First, an insulation of the conductor is removed over a predetermined length. Subsequently, a bead is created in a stripped region of the conductor. The stripped region of the conductor may in this case be the region of the conductor in which the insulation has been removed.

The bead may be arranged in a manner that the conductor is displaced in the direction of the workpiece. This means that the conductor is not straight in the area of the bead, but bended in a way that the conductor in the area of the removed insulation is closer to the workpiece than in other areas of the conductor.

Subsequently, the conductor is held down on the workpiece, the holding down having the effect of producing a mechanical contact in a welding region between the conductor and the workpiece. The welding region is in this case arranged in the region of the bead. Subsequently, a laser welding of the conductor onto the workpiece takes place in the welding region.

The invention is therefore based on the central idea of reducing a distance between the conductor and the workpiece by means of a bead produced in the conductor, which is arranged in the stripped region of the conductor, by the necessary deforming of the conductor already taking place during the forming of the bead and not only when the holding down takes place. The bead may in this case be configured in such a way that a convexity of the conductor in the direction of the workpiece is produced on account of the bead and, as a result, the distance between the conductor and the workpiece is reduced. It may be provided that a further deformation of the conductor, occurring in addition to the bead, takes place during the holding down of the conductor. In particular, the welding process can be improved if a zero gap is produced, that is to say the conductor lies in direct contact with the workpiece.

After the laser welding, the conductor is welded to the workpiece in a further welding region by means of laser welding. The conductoris therefore respectively welded to the workpiece in a welding region and a further welding region, in order to provide a more secure welded connection.

The forming of the bead takes place in such a way that, during the holding down, the conductor initially lies in contact with the welding region and does not lie in contact with the further welding region. The thermal expansion of the conductor during the laser welding in the welding region has the effect that the conductor is deformed in such a way that the conductor subsequently lies in contact with the further welding region and can likewise be welded there to the workpiece. This may take place for example by the bead being configured in such a way that the conductor is arranged closer to the workpiece in the welding region than in the further welding region on account of the bead; the conductor is in contact with the workpiece in particular in the welding region and not in the further welding region.

As a result, the thermal expansion of the conductor during the laser welding can likewise be used to achieve the overall effect of the conductor lying even more advantageously in contact with the workpiece.

In one embodiment of the process, the workpiece comprises a number of conducting regions. The conductor is part of a multi-core conductor, an insulation being removed during the welding process on all of the cores of the multi-core conductor and a bead being formed in the case of all of the cores of the multi-core conductor. In the subsequent laser welding process, the cores are respectively welded one after the other to a conducting region.

This makes possible an efficient process for welding a multi-core conductor to conducting regions of a workpiece, such as is used for example in battery production.

In one embodiment of the process, the conductor is a flat conductor with a rectangular cross section. Such a conductor is particularly well-suited for the welding process described.

In one embodiment, the holding down takes place in a stripped region of the conductor. This may take place for example by means of a holding-down device, which contacts the conductor in the welding region and holds it down on the workpiece. Alternatively, the holding down may for example also take place by an air stream impinging in the stripped region.

In one embodiment of the process, the holding down takes place outside the stripped region. This may likewise take place for example by means of a holding-down device or an air stream. It may also be provided for example to use a holding-down device in the stripped region and a holding-down device in the non-stripped region of the conductor. If the conductor is held down outside the stripped region, as a result the stripped region can be of a reduced size.

In one embodiment of the process, the laser welding in the welding region takes place by means of a number of welding points. The same may also apply in the further welding region. In the case of laser welding, it is generally customary to set a number of welding points at a welding location, for example spirally. The bead allows this to be performed very efficiently in the described welding process, since for example no holding-down devices are necessary in the vicinity of the welding region.

In one embodiment of the process, a depth of the bead substantially coincides with a thickness of the insulation. In particular, the depth of the bead coincides with the thickness of the insulation. As a result, the conductor is in contact with the workpiece in the welding region when it otherwise lies in contact with the insulation on the workpiece and the bead is configured in such a way that a displacement of the conductor thereby initiated is facing the workpiece. This configuration is particularly well-suited for the holding down of the conductor on the insulation or the holding down of the conductor by means of an air stream.

In one embodiment of the process, the forming of the bead takes place by means of drop forging. In this case, the conductor is placed into a tool which comprises at least two moulds, the bead being created in the conductor by means of a forging operation. This makes possible a simple and efficient production process of the bead, good reproducibility of the forging result being possible due to the tool used in the drop forging.

In one embodiment of the process, the first metal comprises aluminium or copper or consists of aluminium or copper. In one embodiment of the process, the second metal comprises aluminium or the first metal is aluminium. In particular, these stated materials are well-suited for the use of the proposed laser welding process. Any light source capable of stimulating emission of which the energy and/or power and/or wavelength is suitable for welding together the metals to be welded may be used as the laser in the laser welding process. Such suitable laser welding processes are known from the prior art.

The problem addressed by the invention, the technical implementation of the solution and the advantages of the invention are clear from the exemplary embodiments, which are to be described below with the aid of figures, in the schematized representation of which:
- Fig. 1: shows a conductor at the starting point of a welding process;
- Fig. 2: shows the conductor after stripping of an insulation;
- Fig. 3: shows the conductor after placing into a tool;
- Fig. 4: shows the conductor after the forming of a bead;
- Fig. 5: shows the conductor after holding down and during a welding operation;
- Fig. 6: shows a stripped multi-core conductor;
- Fig. 7: shows a multi-core conductor with beads;
- Fig. 8: shows a multi-core conductor after welding;
- Fig. 9: shows a further held-down conductor; and
- Fig. 10: shows a held-down conductor during the welding operation.

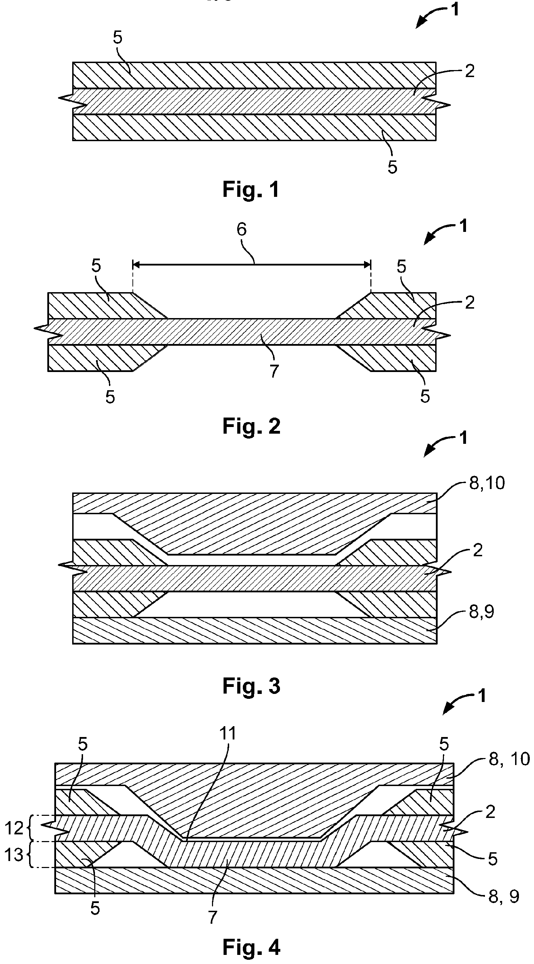

Figure 1 shows a cross section through a conductor 1. The conductor 1 in this case comprises a first metal 2. An insulation 5 has been attached to the first metal 2 of the conductor 1 in such a way that the insulation 5 insulates the first metal 2.

Fig. 2 shows the conductor 1 after the insulation 5 of the conductor 1 has been removed over a predetermined length 6. The removal of the insulation 5 over the predetermined length 6 has had the effect that part of the first metal 2 of the conductor 1 is exposed.

This exposed region may also be referred to as a stripped region 7.

Fig. 3 shows the conductor 1 from Figures 1 and 2 after placing into a moulding tool 8. The moulding tool 8 in this case comprises a lower part 9 and an upper part 10. The moulding tool 8 serves the purpose of forming a bead in the stripped region 7 of the conductor 1, by the upper part 10 of the moulding tool 8 being moved towards the lower part 9.

Fig. 4 shows the conductor 1 once the upper part 10 of the moulding tool 8 has been moved towards the lower part 9 of the moulding tool 8 and a bead 11 has been created in the conductor 1. This takes place for example by pressing the upper part 10 onto the lower part 9. In one exemplary embodiment, the forming of the bead 11 takes place by means of drop forging, the moulding tool 8 then being a drop forging tool.

On account of the bead 11, the conductor 1 is displaced in its position in the stripped region 7. In this case, it may be provided that a depth 12 of the bead 11 substantially coincides with a thickness 13 of the insulation 5. In alternative exemplary embodiments, not shown here, the depth 12 of the bead 11 does not coincide with the thickness 13 of the insulation 5.

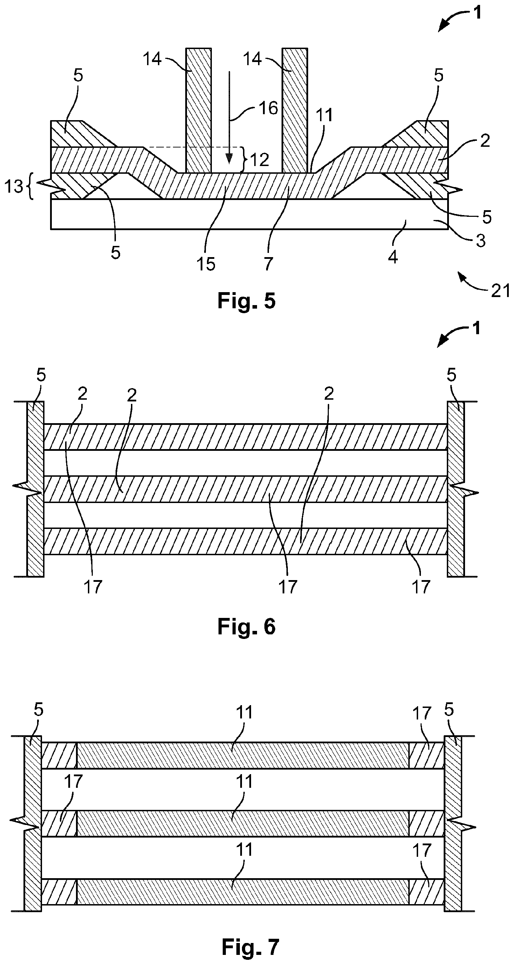

Fig. 5 shows the conductor 1 from Fig. 4 after it has been removed from the moulding tool 8. The conductor 1 is held down on a workpiece 3 by means of holding-down devices 14. The workpiece 3 in this case comprises a second metal 4. In a welding region 15, the first metal 2 of the conductor 1 is welded to the second metal 4 of the workpiece 3 by means of laser radiation 16. The bead 11 has the effect that the holding-down devices 14 have to exert a smaller force on the conductor 1 than in the case of the welding processes known from the prior art, since, on account of the bead 11, the first metal 2 of the conductor 1 already lies substantially in contact with the second metal 4 of the workpiece 3, that is to say substantially forms a zero gap. This applies in particular in the welding region 15.

The conductor 1 and the workpiece 3 form an arrangement 21 of a conductor 1 and a workpiece 3, the conductor 1 comprising a first metal 2 and the workpiece 3 comprising a second metal 4, the conductor 1 the workpiece 3 being welded in a welding region 15 and the conductor 1 being stripped of its insulation in the welding region 15 and comprising a bead 11.

In this case, it may be provided by analogy with Fig. 4 that a depth 12 of the bead 11 substantially coincides with a thickness 13 of the insulation 5 outside the stripped region 7 of the conductor 1.

Fig. 6 shows a multi-core conductor 1 in a plan view. In an insulation 5, three cores 17 have respectively been stripped, the first metal 2 of the cores 17 being visible on account of the stripping of the cores 17. In cross section, this may correspond to the representation of Fig. 2, the cores 17 being arranged one behind the other and therefore only one being visible.

Fig. 7 shows the conductor 1 from Fig. 6 once a bead 11 has been formed in each core 17. This may take place by analogy with the process described in Figures 3 and 4 by means of the moulding tool 8, for example by means of drop forging.

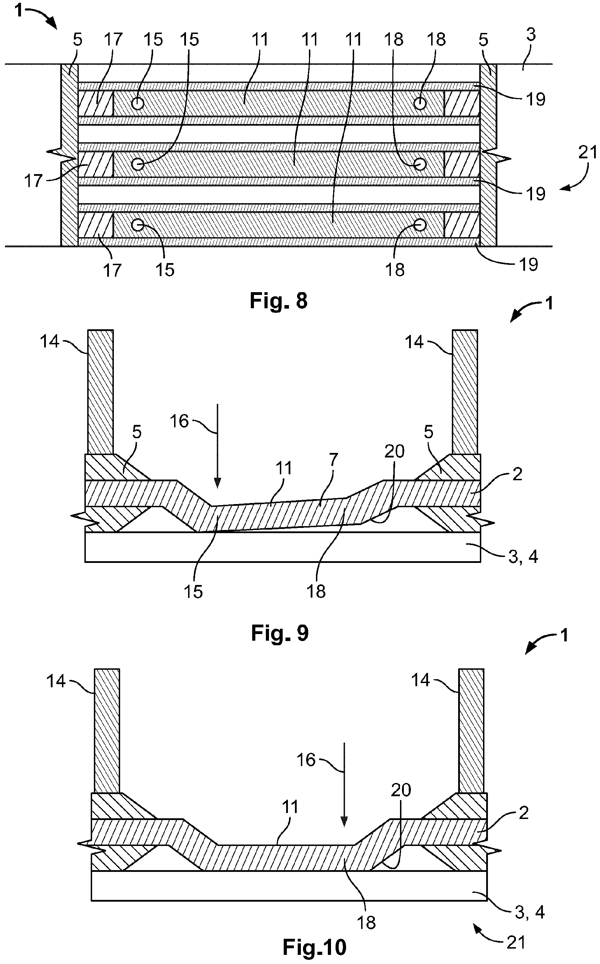

Fig. 8 shows the conductor 1 from Fig. 7 after it has been placed onto a workpiece 3, in plan view. By means of holding-down devices that are not shown, the conductor 1 can be held down on the workpiece 3 in a way analogous to Fig. 5. The workpiece 3 in this case comprises three conducting regions 19, each core 17 being assigned a conducting region 19. On account of the beads 11 of the cores 17, it may be provided, by analogy with Fig. 5, that the cores 17 lie in contact with the conducting regions 19. Each core 17 comprises a welding region 15, at which the conductor 1 or the core 17 of the conductor 1 is welded to the workpiece 3 or the conducting region 19 of the workpiece 3 in a way analogous to Fig. 5 by means of laser radiation 16. Furthermore, the cores 17 respectively comprise a further welding region 18, which is likewise arranged in the region of the bead 11 in the stripped region 7 and at which the cores 17 can likewise be welded to the conducting regions 19.

It is analogously also conceivable to weld the conductor 1 from Fig. 5 additionally to the workpiece 3 in a further welding region 18.

The conductor 1 and the workpiece 3 in this case again form an arrangement 21 of a conductor 1 on a workpiece 3, in which the conductor 1 is welded to the workpiece 3. In particular, each core 17 of the conductor 1 is welded to a conducting region 19 of the workpiece 3. If the conducting regions 19 of the workpiece 3 are insulated with respect to one another, various contactings, for example of a battery, can thus be provided.

Fig. 9 shows a cross section through a further conductor 1 held down on a workpiece 3 by means of holding-down devices 14. By contrast with Fig. 5, the conductor 1 in Fig. 9 is held down by means of the holding-down devices 14 in the region of the insulation 5, that is to say outside the stripped region 7 or the bead 11. This is possible in particular whenever the depth 12 of the bead 11 coincides with the thickness 13 of the insulation 5, as already described, since mechanical contact between the first metal 2 of the conductor 1 and the second metal 4 of the workpiece 3 is nevertheless possible. Thus, the first metal 2 of the conductor 1 can be welded in the welding region 15 to the second metal 4 of the workpiece 3 by means of laser radiation 16. If a number of cores 17 are provided, as shown for example in Figures 6 to 8, each of the cores 17 may be welded by means of this process to a corresponding conducting region 19 of the workpiece 3.

In a further welding region 18, the bead 11 is configured in such a way that there is a distance 20 between the first metal 2 of the conductor 1 and the second metal 4 of the workpiece 3. If, during exposure to the laser radiation 16, the first metal 2 is heated on account of the laser radiation 16, the first metal 2 expands.

Fig. 10 shows the conductor 1 and the workpiece 3 from Fig. 9 after the first metal 2 has been welded to the second metal 4 in the welding region 15 and the first metal 2 has expanded on account of the laser radiation 16 acting on it. The expansion has the effect that the first metal 2 of the conductor 1 then also lies in contact with the workpiece 3 in the further welding region 18 and can likewise be welded there to the workpiece 3 by means of laser radiation 16. The conductor 1 and the workpiece 3 once again form an arrangement 21 as already described above.

It may be provided that the conductor 1 comprises a flat conductor with a rectangular cross section. In particular, the cores 17 may be flat conductors with a rectangular cross section, whereby the contact of the conductor 1 or of the cores 17 lying on the workpiece 3 is improved.

In Fig. 5, the holding down of the conductor 1 by means of the holding-down devices 14 in the stripped region 7 of the bead 11 is shown. In Figures 9 and 10, the holding-down devices 14 are arranged in such a way that the holding down takes place on the insulation 5. It is also conceivable in combination that one of the holding-down devices 14 holds down the conductor 1 in the region of the bead 11 or the stripped region 7, while the other holding-down device 14 holds down the conductor 1 in the region of the insulation 5. Furthermore, it is alternatively likewise conceivable to provide fewer or more holding-down devices 14, for example only one holding-down device or three holding-down devices. Instead of the holding-down devices 14, an air stream may also be used, by means of which the conductor 1 is pressed onto the workpiece 3.

It may be provided that in the welding region 15 or in the further welding region 18 the first metal 2 is welded together with the second metal 4 by means of in each case a number of welding points, that is to say by means of respective multiple exposure to the laser radiation 16. The welding points may for example be arranged in the form of a cross or spiral. The laser radiation 16 may in this case be any laser radiation suitable for welding the first metal 2 and the second metal 4.

A cross section of the first metal 2 of the conductor 1, and also of the cores 17 of the conductor 1, may in this case be 1 millimetre on 0.2 millimetre. This means that, in the representation of Figures 1 to 5 or 9 and 10, a thickness of the first metal 2 of 0.2 millimetre is represented, and the cores 17 from Figures 6 to 8 are represented in their width of 1 millimetre.

The thickness 13 of the insulation 5 may be between 0.1 and 0.5 millimetre, for example 0.3 millimetre. The depth 12 of the bead 11 may then likewise lie in this range and be for example 0.3 millimetre.

It may be provided that the first metal 2 comprises copper or aluminium, is copper or aluminium or comprises a laser-weldable alloy of the stated metals. The second metal 4 may comprise aluminium or a laser-weldable alloy with aluminium.

Although the invention has been described more specifically and illustrated in detail by the preferred exemplary embodiments, the invention is not restricted by the disclosed exemplary embodiments. Other variations may be derived therefrom and from the description of the invention without departing from the scope of protection of the invention, as defined by the appended claims.

### List of reference signs

- 1: conductor
- 2: first metal (of the conductor)
- 3: workpiece
- 4: second metal (of the workpiece)
- 5: insulation
- 6: (predetermined) length
- 7: (stripped) region
- 8: moulding tool
- 9: lower part (of the moulding tool)
- 10: upper part (of the moulding tool)
- 11: bead
- 12: depth (of the bead)
- 13: thickness (of the insulation)
- 14: holding-down device
- 15: welding region
- 16: laser radiation
- 17: core
- 18: further welding region
- 19: conducting region
- 20: distance
- 21: arrangement

## Claims

1. Process for welding a conductor (1) onto a workpiece (3), wherein the conductor (1) comprises a first metal (2) and the workpiece (3) comprises a second metal (4), with the following steps: removing an insulation (5) of the conductor (1) over a predetermined length (6); forming a bead in a stripped region (7) of the conductor (1); holding down the conductor (1) on the workpiece (3), the holding down having the effect of producing a mechanical contact in a welding region (15) between the conductor (1) and the workpiece (3), wherein the welding region (15) is arranged in the region of the bead; laser welding of the conductor (1) onto the workpiece (3) in the welding region (15), **characterized in that**, after the laser welding, the conductor (1) is welded to the workpiece (3) in a further welding region (18) by means of laser welding, that the forming of the bead takes place in such a way that the conductor (1) initially lies in contact with the welding region (15) and does not lie in contact with the further welding region (18), that the thermal expansion during the laser welding in the welding region (15) has the effect that the conductor (1) is deformed in such a way that the conductor (1) subsequently lies in contact with the further welding region (18).

2. Process according to Claim 1, wherein the workpiece (3) comprises a number of conducting regions (19) and the conductor (1) is part of a multi-core conductor (1), an insulation (5) being removed respectively on all of the cores (17) of the multi-core conductor (1), a bead being formed in the case of all of the cores (17) of the multi-core conductor (1), all of the cores (17) being held down and a core (17) being respectively welded to a conducting region (19).

3. Process according to any one of Claims 1 or 2, wherein a depth of the bead substantially coincides with a thickness (13) of the insulation (5).

4. Process according to any one of Claims 1 to 3, wherein the conductor (1) is a flat conductor with a rectangular cross section.

5. Process according to any one of Claims 1 to 4, wherein the holding down takes place in a stripped region (7) of the conductor (1).

6. Process according to any one of Claims 1 to 5, wherein the holding down takes place outside a stripped region (7) of the conductor (1).

7. Process according to any one of Claims 1 to 6, wherein the laser welding in the welding region (15) takes place by means of a number of welding points.

8. Process according to any one of Claims 1 to 7, wherein the forming of the bead takes place by means of drop forging.

## Patentansprüche

1. Verfahren zum Schweißen eines Leiters (1) an ein Werkstück (3), wobei der Leiter (1) ein erstes Metall (2) umfasst und das Werkstück (3) ein zweites Metall (4) umfasst, mit den folgenden Schritten: Entfernen einer Isolierung (5) des Leiters (1) über eine vorgegebene Länge (6); Bilden eines Wulsts in einem abisolierten Bereich (7) des Leiters (1); Niederhalten des Leiters (1) auf dem Werkstück (3), wobei das Niederhalten die Wirkung hat, einen mechanischen Kontakt in einem Schweißbereich (15) zwischen dem Leiter (1) und dem Werkstück (3) zu erzeugen, wobei der Schweißbereich (15) in dem Bereich des Wulsts angeordnet ist; Laserschweißen des Leiters (1) auf das Werkstück (3) in dem Schweißbereich (15), **dadurch gekennzeichnet, dass** nach dem Laserschweißen der Leiter (1) in einem weiteren Schweißbereich (18) durch Laserschweißen an das Werkstück (3) geschweißt wird, dass Bilden des Wulsts auf eine solche Weise erfolgt, dass der Leiter (1) anfangs in Kontakt mit dem Schweißbereich (15) liegt und nicht in Kontakt mit dem weiteren Schweißbereich (18) liegt, dass die Wärmeausdehnung während des Laserschweißens in dem Schweißbereich (15) die Wirkung hat, dass der Leiter (1) auf eine solche Weise verformt wird, dass der Leiter (1) anschließend in Kontakt mir dem weiteren Schweißbereich (18) liegt.

2. Verfahren gemäß Anspruch 1, wobei das Werkstück (3) mehrere leitfähige Bereiche (19) umfasst und der Leiter (1) Teil eines mehrkernigen Leiters (1) ist, eine Isolation (5) von jeweils allen der Kerne (17) des mehrkernigen Leiters (1) entfernt wird, für alle der Kerne (17) des mehrkernigen Leiters (1) jeweils ein Wulst gebildet wird, alle der Kerne (17) niedergehalten werden und jeweils ein Kern (17) an einen leitfähigen Bereich (19) geschweißt wird.

3. Verfahren gemäß einem der Ansprüche 1 oder 2, wobei eine Tiefe des Wulsts im Wesentlichen mit einer Dicke (13) der Isolation (5) übereinstimmt.

4. Verfahren gemäß einem der Ansprüche 1 bis 3, wobei der Leiter (1) ein flacher Leiter mit einem rechteckigen Querschnitt ist.

5. Verfahren gemäß einem der Ansprüche 1 bis 4, wobei das Niederhalten in einem abisolierten Bereich (7) des Leiters (1) erfolgt.

6. Verfahren gemäß einem der Ansprüche 1 bis 5, wobei das Niederhalten außerhalb eines abisolierten Bereichs (7) des Leiters (1) erfolgt.

7. Verfahren gemäß einem der Ansprüche 1 bis 6, wobei das Laserschweißen in dem Schweißbereich (15) mithilfe mehrerer Schweißpunkte erfolgt.

8. Verfahren gemäß einem der Ansprüche 1 bis 7, wobei das Bilden des Wulsts durch Gesenkschmieden erfolgt.

## Revendications

1. Procédé destiné à souder un conducteur (1) sur une pièce de fabrication (3), dans lequel le conducteur (1) comprend un premier métal (2) et la pièce de fabrication (3) comprend un deuxième métal (4), avec les étapes suivantes : retrait d'une isolation (5) du conducteur (1) sur une longueur prédéterminée (6) ; formation d'un cordon dans une région dénudée (7) du conducteur (1) ; maintien du conducteur (1) sur la pièce de fabrication (3), le maintien ayant pour effet de produire un contact mécanique dans une région de soudage (15) entre le conducteur (1) et la pièce de fabrication (3), dans lequel la région de soudage (15) est disposée dans la région du cordon ; soudage au laser du conducteur (1) sur la pièce de fabrication (3) dans la région de soudage (15), **caractérisé en ce que**, après le soudage au laser, le conducteur (1) est soudé à la pièce de fabrication (3) dans une autre région de soudage (18) par soudage au laser, **en ce que** la formation du cordon se fait de telle sorte qu'au départ le conducteur (1) se trouve en contact avec la région de soudage (15) et ne se trouve pas en contact avec l'autre région de soudage (18), **en ce que** la dilatation thermique pendant le soudage au laser dans la région de soudage (15) a pour effet de déformer le conducteur (1) de telle sorte que le conducteur (1) se trouve ensuite en contact avec l'autre région de soudage (18) .

2. Procédé selon la revendication 1, dans lequel la pièce de fabrication (3) comprend un nombre de régions conductrices (19) et le conducteur (1) fait partie d'un conducteur à âmes multiples (1), une isolation (5) étant respectivement retirée sur toutes les âmes (17) du conducteur à âmes multiples (1), un cordon étant formé dans le cas de toutes les âmes (17) du conducteur à âmes multiples (1), toutes les âmes (17) étant maintenues et une âme (17) étant respectivement soudée à une région conductrice (19).

3. Procédé selon l'une quelconque des revendications 1 et 2, dans lequel une profondeur du cordon coïncide sensiblement avec une épaisseur (13) de l'isolation (5).

4. Procédé selon l'une quelconque des revendications 1 à 3, dans lequel le conducteur (1) est un conducteur plat avec une section transversale rectangulaire.

5. Procédé selon l'une quelconque des revendications 1 à 4, dans lequel le maintien se fait dans une région dénudée (7) du conducteur (1).

6. Procédé selon l'une quelconque des revendications 1 à 5, dans lequel le maintien se fait à l'extérieur d'une région dénudée (7) du conducteur (1).

7. Procédé selon l'une quelconque des revendications 1 à 6, dans lequel le soudage au laser dans la région de soudage (15) se fait au moyen d'un nombre de points de soudage.

8. Procédé selon l'une quelconque des revendications 1 à 7, dans lequel la formation du cordon se fait par forgeage par matriçage.
